# EUROPEAN PATENT APPLICATION

(11) **EP 1 643 407 A1**
(43) Date of publication of application: **05.04.2006**
(21) Application number: 05255902.8
(22) Date of filing: 22.09.2005
(51) Int. Cl.: G06F 21/00

(54) **Method for disabling a computing device based on the location of the computing device**

(30) Priority: 29.09.2004 US 953813
(71) Applicant: LUCENT TECHNOLOGIES INC., Murray Hill, New Jersey 07974-0636 (US)
(72) Inventor: Pfleging, Gerald W., Batavia, Illinois, 60510 (US); Wilkin, George Paul, Bolingbrook, Illinois, 60440 (US)
(74) Representative: Sarup, David Alexander

(57) **Abstract**

The present invention provides a method for disabling a computing device based on the location of the computing device. The computing device, such as a computer or the like, determines if there is a location restriction for the computing device. This can be accomplished by checking the BIOS of the computing device, and is preferably accomplished during the powering up of the computing device. If so, the computing device determines its location. This can be accomplished utilizing a Global Positioning System (GPS). The computing device is disabled if there is a location restriction for the computing device for the current location of the computing device.

## Description

### FIELD OF THE INVENTION

The present invention relates generally to computing devices, and more particularly to a method for disabling a computing device based upon the location of the computing device.

### BACKGROUND OF THE INVENTION

Computing devices are used for an ever-expanding number of applications. As the use of computers has expanded, the processing and memory capabilities has increased while the price and size of computers has decreased. The proliferation of computing devices has led to additional security concerns being raised by the companies that are using the devices for advanced research or in some cases just every day work.

One problem that has arisen is the problem of security. Computers often contain valuable information for a business or personal user. If a computer is stolen, this information could be of great value to a competitor.

A second problem is the loss of a valuable asset of a computing device is stolen. Whether for a home or business, when a computer is stolen, a significant financial investment can be lost.

Therefore, a need exists for a method for increasing the security of computing devices.

### BRIEF SUMMARY OF THE INVENTION

The present invention provides a method of access control over a computing device or component. The access control is based on the current location of the computing device, preferably using GPS (Global Positioning System) technology.

The present invention provides the disabling, or locking-out, of access to a computing device if the computing device is not located within a predefined location area. The present invention reduces the likelihood of theft of laptop computers or other computers or components by making them inoperable when they are outside of the location area. Further, disabling computing devices that are located outside of predetermined areas, such as a computer lab, lessens the impact of potential corporate-espionage as the devices only work in the predefined location areas.

### BRIEF DESCRIPTION OF THE SEVERAL VIEWS OF THE DRAWINGS

FIG. 1 depicts a location area and a plurality of computing devices in accordance with an exemplary embodiment of the present invention.
FIG. 2 depicts a flowchart of a method for disabling a computing device based upon the location of the computing device in accordance with an exemplary embodiment of the present invention.

### DETAILED DESCRIPTION OF THE INVENTION

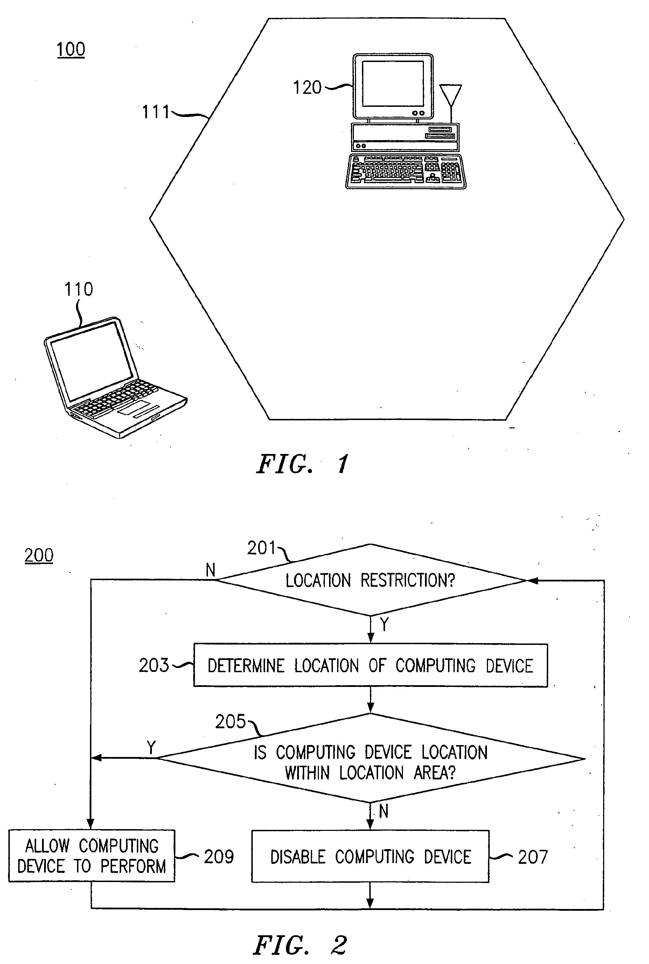

FIG. 1 depicts a location area 111, a first computing device 110, and a second computing device 120 in accordance with an exemplary embodiment of the present invention.

Location area 111 is a geographic area defined by geographic boundaries. Location area 111 can be defined by any geographic coordinates. Further, location area 111 can be defined by geographic coordinates and altitude. The location area can be limited to a house, a building, an office, a lab, or any other location that an owner of a computing device would want to limit the operability of the computing device to.

Computing device 110 is a portable computer. Computing device 110 can be a computer, a component such as a hard drive or other memory, a mobile phone, or any other electronic device. As depicted in FIG. 1, computing device 110 is not located within location area 111.

Computing device 120 is depicted as a desktop computer that is located within location area 111. Computing device 120 includes an indication that computing device 120 is subject to a location restriction and also the coordinates of the location area.

The computing devices that are subject to location restrictions include location settings. In an exemplary embodiment, the location settings are pre-burned into the BIOS of the computing device. In a further exemplary embodiment, in the case where the computing device is a component, such as a hard drive, the location settings are embedded in the component itself and allow the component BIOS to determine if the component should operate.

As depicted in FIG. 1, computing device 110 is located outside of location area 111 and computing device 120 is located within location area 111. Both computing devices include a location restriction that allows the computing devices to only operate while they are located within location area 111. Computing device 110 would not be operational, while computing device 120 would be operational, since computing device 120 is located within location area 111.

FIG. 2 depicts a flowchart 200 of a method for disabling a computing device based upon the location of the computing device in accordance with an exemplary embodiment of the present invention.

The computing device determines (201) if there is a location restriction for the computing device. In an exemplary embodiment, the computing device looks at location settings in the computing device when powering up. The location settings indicate whether there is a location restriction for the computing device, and if so the geographic boundaries of the location area.

In an exemplary embodiment, the computing device determines if there is a location restriction by checking the BIOS of the computing device. The computing device preferably determines if there is a location restriction during power up. In a further exemplary embodiment, the computing device determines if there is a location restriction on a regularly scheduled basis, or upon detection of movement. If there are no location restrictions, the computing device is allowed (209) to power up and become operable.

In an exemplary embodiment, the location restriction can be disabled. In this embodiment, even if a location restriction is hardcoded into a computing device, the location restriction can be disabled. For example, the user of the computing device, or a system administrator, can enter a password that disables the checking of location to determine operability of the computing device.

If there is a location restriction, the computing device determines (203) the location of the mobile unit. In an exemplary embodiment, the computing device determines the location utilizing a Global Positioning System (GPS). In a further exemplary embodiment, the computing device determines its location utilizing a triangulation technique, such as the method being used for cellular E911 services.

The computing device then determines (205) if its location is within a location area. If the computing device is located within a location area as determined in step 205, the computing device is allowed (209) to perform the functions of the computing device. In an exemplary embodiment of the present invention, if the computing device is located outside the location area, information sent between the computing device and a network connection can be encrypted and decrypted, thereby offering improved data security for the computing device.

If the computing device is not located within the location area as determined in step 205, the computing device is disabled (207). In an exemplary embodiment, the computing device is disabled upon power up while the computing device is not located within the location area. In a further exemplary embodiment, the computing device is disabled when the computing device moves outside of the location area. In this exemplary embodiment, the computing device returns to step 201 and checks its location periodically and compares the location with the location area to determine if the computing device is still located within the location area.

If the computing device is no longer within the location area, the computing device would preferably power down or hibernate and become inoperable. In an exemplary embodiment, a warning screen pops up on the computing device and instructs the user to enter a password within a predetermined period of time or the computing device will shut down. In a further exemplary embodiment, the computing device can override the automatic shutdown based upon moving by accepting a password, utilizing an encryption device, or any other way of confirming that the user has the permission to override the disabling of the computing device.

Therefore, the present invention provides a method for disabling a computing device when the computing device is not located within a predetermined location area. By disabling a computing device, which includes computers, hard drives, and the like, when it is outside of a location area, the security of computing devices is improved.

While this invention has been described in terms of certain examples thereof, it is not intended that it be limited to the above description, but rather only to the extent set forth in the claims that follow.

## Claims

1. A method for disabling a computing device based on the location of the computing device, the method comprising:
determining if there is a location restriction for a computing device;
determining the location of the computing device; and
disabling the computing device if there is a location restriction for the computing device for the_ location of the computing device.

2. A method for disabling a computing device based on the location of the computing device in accordance with claim 1, wherein the step of determining the location of a computing device comprises determining the location of a computing device utilizing a Global Positioning System (GPS) .

3. A method for disabling a computing device based on the location of the computing device in accordance with claim 1, wherein the step of determining if there is a location restriction for the computing device comprises determining if there is a location restriction for the computing device upon power up of the computing device.

4. A method for disabling a computing device based on the location of the computing device in accordance with claim 1, the method further comprising the step of disabling the location restriction.

5. A method for disabling a computing device based on the location of the computing device in accordance with claim 1, the method further comprising the step of encrypting information that is sent to a network connection by the computing device while the computing device is located within the location.

6. A method for disabling a computing device based on the location of the computing device in accordance with claim 1, the method further comprising the step of disabling the checking of location to determine operability of the computing device.

7. A method for disabling a computing device based on the location of the computing device in accordance with claim 1, wherein the step of disabling the computing device comprises disabling the computing device when the computing device moves outside of the location area.

8. A method for disabling a computing device based on the location of the computing device in accordance with claim 1, wherein the step of disabling the computing device comprises powering down the computing device.

9. A method for disabling a computing device based on the location of the computing device in accordance with claim 1, the method further comprising the step of overriding the disabling of the computing device based upon moving by accepting a password.

10. A method for disabling a computing device based on the location of the computing device in accordance with claim 1, the method further comprising the step of overriding the disabling of the computing device based upon utilizing an encryption device.
